# EUROPEAN PATENT SPECIFICATION

(11) **EP 2 087 167 B1**
(45) Date of publication and mention of the grant of the patent: **29.11.2017**
(21) Application number: 07866398.6
(22) Date of filing: 31.10.2007
(51) Int. Cl.: D21B 1/32, G01N 21/21

(54) **METHOD AND EQUIPMENT FOR EVALUATION OF RECYCLED PULP AND PULP**
VERFAHREN UND AUSRÜSTUNG ZUR BEWERTUNG VON ZELLSTOFF UND RECYCELTEM ZELLSTOFF
PROCÉDÉ ET MATÉRIEL POUR L'ÉVALUATION DE PÂTE À PAPIER RECYCLÉE ET DE PÂTE À PAPIER

(30) Priority: 01.11.2006 FI 20060959
(43) Date of publication of application: 12.08.2009
(73) Proprietor: Ye, Chun, 87200 Kajaani (FI); Vilenius, Ari, 87700 Kajaani (FI); Saren, Matti-Paavo, 87250 Kajaani (FI)
(72) Inventor: Ye, Chun, 87200 Kajaani (FI); Vilenius, Ari, 87700 Kajaani (FI); Saren, Matti-Paavo, 87250 Kajaani (FI)
(74) Representative: Boco IP Oy Ab
(86) International application number: PCT/FI2007/000264
(87) International publication number: WO 2008/053070

(56) References cited:
- WO-A-96/10168
- US-A1- 2005 122 514

## Description

### FIELD OF THE INVENTION

This invention relates to a method and equipment for real-time and/or on-line evaluation of recycled pulp or pulp immersed in suspension and especially for measurement of particles including inks contained in recycled pulp.

### BACKGROUND OF THE INVENTION

Recycled pulp contains wood fibers and various particles e.g. inks. The presence of ink particles influences the cleanliness, brightness and color of recycled paper. The deinkability of recycled paper describes the degrees of printing ink removal by a deinking process. Evaluation of the deinkability of recycled or deinked pulp includes measurements of the effective residual ink concentration (ERIC value), the ink elimination (IE), the ink detachment (ID), the deinkability factor (DEM) and the brightness (TAPPI T 567 method "Determination of effective residual ink concentration (eric) by infrared reflectance measurement", http://www.ingede.de/ingindxe/methods/meth01pe.pdf3, http://www.ingede.de/ingindxe/methods/meth02pe.pdf). Previous methods for the evaluation of the deinkability of recycled pulp use and measure specially prepared dry handsheets of pulp as the sample (e.g. B. D. Jordan and S. J. Popson, Journal of Pulp and Paper Science, 20 (6): 161 (June 1994)).

A typical disadvantage of the previous methods is that they measure a pulp handsheet as an entire sample with the measurement results highly dependent on the sample analyzed and do not give information about fibers and particles contained in the handsheet sample. The ERIC value gives no information about the actual quantity of inks and its measurement depends on the distribution of ink particle sizes, and on the agglomeration effects such as deinking chemistry. Also as known, the brightness is not only affected by the presence of ink but also by the other (chemical) substances such as lignin and dye, either particles or dissolved, which absorb light mainly in visible range. So a brightness measurement on an entire pulp sample cannot make a difference between the inks, which are already detached from or still attached to fibers. Inks detached from the fibers can be removed by flotation while those still attached to the fibers cannot or are difficult to be removed. Method for distinguishing whether ink particles are free or attached to the fibers will help optimizing the pulping process so that a lot of energy, chemicals and fibers can be saved, hi addition, the previous methods for evaluation of the deinkability are offline methods, requiring time-consuming sample preparation, and unable to be used for effective fiber quality control and interactive process optimization.

As a possible solution for real-time or on-line measurement of recycled pulp, methods were developed, which use and measure the suspension of pulp fibers as the sample instead of the dry pulp handsheet. An earlier described system is BT-5300 brightness sensor from BTG (Klaus Villforth: Brightness, Ink Elimination and ERIC value - relevant parameters for evaluating deinking processes, L^Times, Pulp and Paper Process News, No 12, BTG Pulp & Paper Sensors AB, Sweden), which uses an optical arrangement that measures light reflectance of four pulsating light sources at fiber suspensions for determination of the optical properties of the suspensions. A more recently developed spectrometer for fiber suspension is reported by Villforth et al (Villforth, H.K. & G[delta]ttsching, L., ipw. International Paperworld, ISSN: 1615- 1720, Germany, 2003, no.6, p. 61-67), which measures light scattering power, reflection factors and absorption coefficients in analogy to the measurement of a pulp handsheet sample. The methods of BTG and Villforth et al are based on the reflectance measurement and they are further development of the methods of measuring the pulp handsheet sample with the pulp handsheet sample replaced by a fiber suspension. For the methods of BTG and Villforth et al, quick or on-line measurement is possible because no sample preparation is needed. However, these methods measure a fiber suspension as an entire sample and cannot give information about fibers and particles contained in the suspension so that they are subjected to the same disadvantages of the methods using the pulp handsheet sample as described above.

US patent application 2005/0122514A1 presents a circular polarized light method and device for determining wall thickness and orientations of fibrils of cellulosic fibres. The method is based on the change of polarization of polarized light that passes through a specimen composed of birefringent layers with different optical axis orientations, such as directions of cellulosic microfibrils oriented differently in various layers of wood fibres.

WO9610168 discloses a method and device for determining the orientation angle of the optical axis and the relative phase retardation of a birefringent specimen. It provides a new method an device for determining the fibril angle and the relative phase retardation of single, intact pulp fibers. The new method is based on the intensity quotient ellipsometry and uses the multi-wavelength principle to determine the measurement results.

As the prior art demonstrates, the most methods so far available for measurement of recycled pulp are limited for use in laboratories and there are a few real-time or on-line measurement methods, which are restricted for their liabilities.

Therefore, it is an object of the present invention to provide a method and equipment as a solution for real-time and/or on-line measurement of recycled or deinked pulp or pulp immersed in suspension, which is capable of real-time assessment of optical characteristics of particles including inks contained in the suspension and distinguishing which inks are already detached from fibers and which ones not, still attached to fibers.

Another object of the present invention to provide a method and equipment for real-time distinguishing the fibers and fiber-based particles from the non-fiber particles in recycled pulp or pulp to recognize which particles are fibrous and which ones are non-fiber particles.

### SUMMARY OF THE INVENTION

The method of the invention is intended for measurement of recycled pulp or pulp, mainly for real-time evaluation of recycled pulp or pulp.

The method comprises the steps of providing equipment that contains at least one imaging channel and comprises elements including a light source, an entrance polarizer, a sample unit, an exit polarizer, a spectral filter having a predetermined wavelength, at least an image sensor and an image-processing unit for image and data processing. The method is mainly characterized by immersing said recycled pulp or pulp in solution, placing said recycled pulp or pulp in solution in said sample unit, arranging said light source, entrance polarizer, sample unit, exit polarizer and image sensor arranged along a light beam axis in series in the recited order with said image sensor interfaced to said image-processing unit, generating a first image of fibers and particles selected for measurement by orienting said exit polarizer parallel to said entrance polarizer, detecting said first image of fibers and particles by said image sensor and outputting said first image to said image-processing unit, generating a second image of fibers and particles selected for measurement by orienting said exit polarizer perpendicular to said entrance polarizer, detecting said second image of said fibers and particles by said image sensor and outputting said second image to said image-processing unit, generating a third image of fibers and particles selected for measurement with said exit polarizer replaced by said spectral filter, detecting said third image of said fibers and particles by said image sensor and outputting said third image to said image-processing unit, and processing said first, second and third images in said image-processing unit and comparing said first, second and third images with one another for measuring and evaluating said fibers and particles selected for measurement.

The equipment of the invention for measurement of recycled pulp or pulp compries elements including a light source generating light beam having a spectrum in a predetermined wavelength range, an entrance polarizer, a sample unit with said recycled pulp or pulp placed therein, which is immersed in solution, a beamsplitter, an exit polarizer, a filter, a first image sensor, a second image sensor, and an image-processing unit for image and data processing. Said equipment is mainly characterized in that said equipment contains two imaging channels connected to said first and second image sensors, respectively. Light emergent from said light source goes through said entrance polarizer and sample unit with said recycled pulp or pulp placed therein, and is divided by said beamsplitter into two component beams with one of said component beams detected by said first image sensor after passing through said exit polarizer. The other one by said second image sensor after passing through said filter, and images detected by said first and second image sensors are interfaced to said image-processing unit where said detected images are digitized and processed, and in that said filter is a spectral filter of a predetermined wavelength and said second image sensor detects and outputs an image of particles in said recycled pulp or pulp at the predetermined wavelength.

In a preferable embodiment, the method of the invention is for evaluation of recycled pulp or pulp in laboratory, using equipment containing one imaging channel, constructed with only one image sensor and said elements above. According to the method, three images of fibers and particles of said recycled pulp or pulp are sequentially acquired with said polarizer oriented parallel and perpendicular to said entrance polarizer and with said exit polarizer replaced by said filter, which preferably is a spectral filter in the near-infrared range, typically at 950 nm. These images are processed and compared with one another for measuring and evaluating said fibers and particles selected for measurement.

In another preferable embodiment, said equipment has two imaging channels constructed with two image sensors and a beamsplitter in addition to said elements above and such equipment is used in the method of the invention for real-time evaluation of recycled pulp or pulp. The method of the invention comprises the steps of generating and forming images of fibers and particles of said recycled pulp or pulp selected for measurement behind said exit polarizer in one of said channels connected to said first image sensor and behind said filter in the other channel connected to said second image sensor, respectively, detecting said image of fibers and particles in said channel connected to said first image sensor by said first image sensor, using and processing said image of said first image sensor for measuring and evaluating fibers and particles in said image of said first image sensor, detecting said image of fibers and particles in said channel connected to said second image sensor by said second image sensor, and using and processing said image of said second image sensor for measuring and evaluating fibers and particles in said image of said second image sensor, and comparing and processing said images of said first and second image sensors for measuring and evaluating fibers and particles in said images of said first and second image sensors.

The preferable embodiments of the invention have the characteristics of the subclaims. In one such embodiment, the elements of the equipment may additionally include a first quarter-wave retarder and a second quarter-wave retarder.

Said light source generates light beam having a broad spectrum in a predetermined wavelength range. For example, it can be a white light source or an assembly comprising proper laser diode or diodes at the wavelengths as wished.

The equipment of the invention is developed based on the method of the invention, which functions as a two-channel imaging spectrometer, capable of simultaneously generating two micrographs of fibers and particles of recycled pulp or pulp preferably immersed in suspension. Fibers and particles are illuminated by a light beam of the light source having a broad spectrum in a predetermined wavelength range, preferably the visible and near infrared range, and the light emergent from the sample is divided by a beamsplitter into two component beams in two channels, which are detected by two image sensors, preferably CCD or CMOS cameras, respectively. In an embodiment of the invention, the components in one of the two channels include two quarter-wave retarders inserted between and oriented at 45° to a pair of parallel or perpendicular polarizers with the sample suspension placed between the retarders. This channel of the equipment is capable of creating an image of fibers and particles in the suspension with a bright or dark background, which is insensitive to the fibers' orientation and formed or determined only by the fibers' properties related to the polarized light. In the second channel of the equipment, there is no exit polarizer used behind the sample, instead a near-infrared bandpass filter, preferably of 950 nm, so that the second channel works as a photometer. In the image detected by the image sensor of this channel, only ink particles contained in the sample are visible because inks absorb light at 950 nm several orders stronger than fibers and non-ink particles.

By comparing the images of the two channels of the equipment, it is feasible to recognize which particles are inks and to distinguish which inks are already detached from or still attached to fibers. Moreover, the image of the second channel can be used for measuring the transmission absorption of ink related to a neighboring background image part without fiber and particle or a calibrated reference. From the results of the absorption measurement, the opacity of ink can be determined. In addition, with proper image analysis, the size, shape and area of ink and the amount of the inks contained in the image of the second channel are measurable. Also the concentration of the inks in the image can be measured if the suspension is prepared such that it has a fixed density of recycled pulp and a fixed layer thickness in the direction the light goes through. The ink concentration here can be defined and expressed as a ratio of the area all the inks occupied in the image related to that of all the fibers and particles. Thus, a parameter can be established by properly combining the ink concentration and the transmission absorption, which is equivalent to the effective residual ink concentration (ERIC value), but independent of the distribution of ink particle sizes. Furthermore, the image of the first channel can be used for determining the size and spectral characteristics of a particle or fiber in the image including color locus (L*, a*, b* values) with the help of proper image processing.

In accordance with the invention, the characteristics of particles or inks at other wavelength(s) can also be measured by changing the filter. For example, the image of the second channel formed with a filter of 700 nm can be used for measuring the absorption coefficients of a particle in the image at this wavelength and also determining the concentration of inks or particles visible at 700 nm. From the results of the absorption measurement and ink or particle concentration, a new parameter can be established, which can be equivalent to the ink elimination (IE) or the ink detachment (ID), but independent of the distribution of ink particle sizes.

According to the invention, the equipment can be modified for real-time identification of the fibers and fiber-based particles contained in recycled pulp or pulp from the non-fiber particles. In the modified equipment, the filter in the second channel is replaced by a polarizer, oriented perpendicular to the exit polarizer in the first channel. With this modification, the second channel outputs a polarizing image of fibers and particles in the recycled pulp or pulp, also insensitive to the fibers' orientation, but with a dark or bright background. In the image having dark background detected by the second or first image sensor, all the non-fiber particles contained in the recycled pulp or pulp sample are hidden by the dark background and therefore become invisible. Thus, by comparing the images of the both channels, it is feasible to distinguish the fibers and fiber-based particles from the non-fiber particles or to recognize which particles are fibrous and which ones are non-fiber particles.

The method and equipment of the present invention can be adapted for use for measurement of recycled pulp or pulp under on-line conditions. In principle, the equipment can also be further modified, for example to have three channels or more so that more measurement assignments can be performed simultaneously. In addition, the equipment of the invention can be used in the reflection mode. The principle and features of this invention will become more apparent from the following description in conjunction with the accompanying drawings.

### BRIEF DESCRIPTION OF THE DRAWINGS

FIG. 1 is a schematic diagram of the equipment of the present invention for real-time and/or on-line evaluation of recycled pulp or pulp, especially for real-time and/or on-line measurement of the sizes and optical characteristics of ink particles in recycled pulp.
FIG. 2 is a schematic diagram of the equipment of the present invention when it is modified for real-time and/or on-line identification of the fibers and fiber-based particles contained in recycled pulp or pulp from the non-fiber particles.

### DESCRIPTION OF THE PREFERRED EMBODIMENT

The method of the present invention uses imaging equipment for measuring the optical characteristics and sizes of the intended particles contained in recycled pulp or pulp and for distinguishing the fibers and fiber-based particles from the non-fiber particles. The recycled pulp or pulp sample used in the equipment of the invention is a suspension or liquid, in which fibers and particles of recycled pulp or pulp are immersed and distributed. Fiber suspension sample does not need special and time-consuming preparation procedure and it is convenient to be further used for measurement under the on-line condition with the help of proper means that holds and guides the suspension going through the measurement equipment to be used. With a fiber suspension sample, it is considerable to carry out both the transmission and reflectance measurement. In the description below, the equipment of the invention is a transmission imaging photometer for real-time and/or on-line measurement of recycled pulp or pulp, which shall be considered in all respects as illustrative and not restrictive.

The equipment of the invention is an imaging photometer, which may consist of one or two imaging channels or more. The method of the present invention respectively uses a one-channel imaging photometer for measurement of recycled pulp or pulp in laboratory and a photometer of two imaging channels or more for real-time evaluation and measurement of recycled pulp or pulp. Because the main objective of the present invention is to provide a method and equipment as a solution for real-time and/or on-line measurement of recycled pulp and pulp, the description of the invention below are mainly focused on the method of the invention and its equipment consisting of two imaging channels.

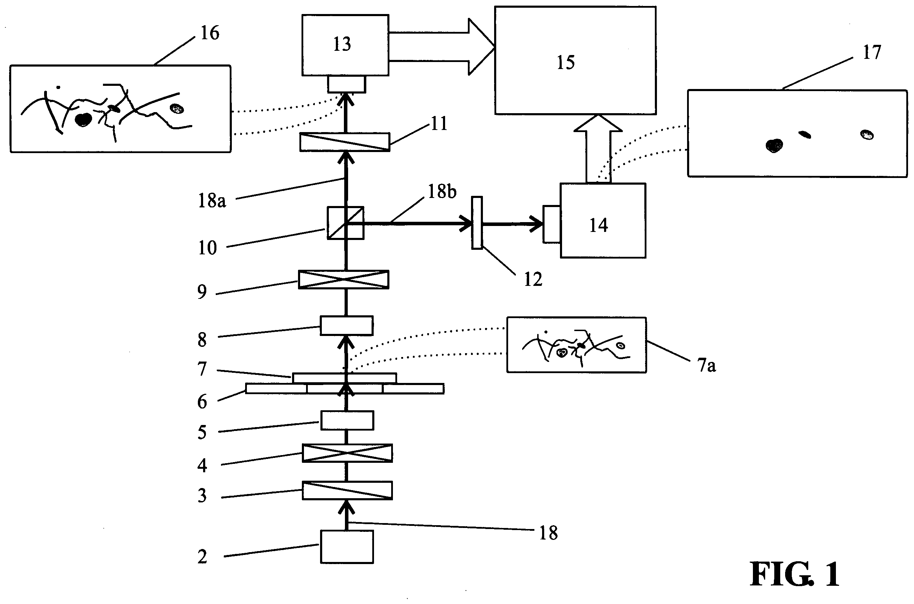

FIG. **1** schematically illustrates the arrangement of the two-channel imaging photometer of the present invention for real-time measurement of recycled pulp or pulp. The photometer comprises a light source **2,** an entrance polarizer **3** (azimuth P₁=0°), a first quarter-wave retarder **4** (orientation angle ϕ₁), a condenser **5,** a sample unit **6,** an objective **8,** and a second quarter-wave retarder **9** (orientation angle ϕ₂), a beamsplitter **10,** an exit polarizer **11** (azimuth P₂), a bandpass spectral filter **12,** and two image sensors **13** and **14** in connection to an image-processing unit **15.** The light source **2** can be one as used in a microscope or an assembly comprising proper laser diode or diodes at the wavelengths as wished and it generates a light beam **18** having a broad spectrum, preferably in the visible and near infrared range. The image sensors **13** and **14** may be CCD or CMOS cameras or the like. The light beam **18** enters entrance polarizer **3** and it is linearly polarized. The linearly polarized light goes through the quarter-wave retarder **4** and it is focused to a recycled pulp or pulp sample **7** under test on the sample unit **6** through the condenser **5.** The sample **7** is a suspension containing recycled fibers and particles. The sample unit **6** may be a microscope slide, on which the sample **7** is distributed and covered with a cover glass. The sample **7** has a small part **7a** (as exaggeratedly illustrated in FIG. **1**), which is being illuminated by the light **18.** The light **18** emergent from the sample part **7a** is imaged and focused by the objective **8** and it passes through the quarter-wave retarder **9** and then divided into two component beams **18a** and **18b** by the beamsplitter **10.** The beam **18a** goes through the exit polarizer **11** and reaches the image sensor **13.** The exit polarizer **11** is aligned to be parallel or perpendicular to the entrance polarizer **3,** i.e. P₂=0° or P₂=90°. The quarter-wave retarders **4** and **9** are preferably achromatic in the wavelength range of the equipment with their retardation errors negligible. They are oriented perpendicular or parallel to each other such that they both make an angle of 45° related to the entrance polarizer **3,** i.e. ϕ₁=45° and ϕ₂=-45° or ϕ₁=45° and ϕ₂=45°. The spectral filter **12** may be a filter installed in a filter wheel (not shown) or a tunable spectral filter so that its wavelength selection is changeable. The beam **18b** is filtered by the spectral filter **12** and only the light component at the wavelength of the filter **12** passes through and is detected by the image sensor **14.** The images detected by the image sensors **13** and **14,** which preferably are identical, are interfaced and sent to the image-processing unit **15.**

In the channel of the photometer in FIG. **1****,** in which the image sensor **13** is, the entrance polarizer **3,** quarter-wave retarders **4** and **9,** and exit polarizer **11** constitute an imaging ellipsometer. However, in the other channel, in which the image sensor **14** is, there is only one polarizer (polarizer **3**) and a second polarizer is missing so that it functions as an ordinary imaging photometer. The image of a pulp fiber from the sample part **7a** created in the channel of the sensor **13** behind the exit polarizer **11** is insensitive to the fiber's orientation and determined only by the fiber's properties related to the polarized light if ϕ₁-45° and ϕ₂=45° or ϕ₁=45° and ϕ₂=45° for P₂=0° or P₂=90° (Ye, C., Patent Application of Finland, No. 20060715, "Method and equipment especially for measurement of intact pulp fibers"). For P₂=0°, ϕ₁=45° and ϕ₂=-45° or P₂=90°, ϕ₁=45° and ϕ₂=45° the image sensor **13** will detect a magnified picture **16** of all fibers and particles contained in the sample part **7a** with a bright background image, independently of the fibers' orientations. At the same time, in the other channel, the image sensor **14** will detect and output a magnified picture **17** of ink particles contained in the sample part **7a** if a bandpass filter in the near infrared range, preferably at 950 nm, is used as the filter **12,** because inks absorb light at 950 nm or in the near infrared range several orders stronger than fibers and non-ink particles.

With the image **17** formed when the filter **12** is a bandpass filter of 950 nm, the transmission absorption *k* of an ink particle can be measured and ascertained related to a neighboring background image segment without fiber and particle, which can be selected with the help of the image **16,** or a calibrated reference. From the obtained results for absorption measurement, the opacity of ink can be determined. In addition, by image analysis, the size, shape and area of an ink particle and the amount of the inks contained in the image **17** are measurable. Also the ink concentration of the image **17** can be measured if the suspension is prepared such that it has a fixed density of recycled pulp and a fixed layer thickness in the direction the light goes through. The ink concentration *cᵢₙₖ* of an image can be defined and expressed as a ratio of the area all the inks occupied in the image related to that of all the fibers and particles. Thus, a parameter can be established or generated by properly combining the ink concentration *cᵢₙₖ* and the transmission absorption *k*, which is equivalent to the effective residual ink concentration (ERIC value), but independent of the distribution of ink particle sizes.

In contrary to the image **17,** in the polarizing image **16** of the channel of the image sensor **13** all fibers and particles contained in the sample part **7a** are visible. Thus, by comparing the image **16** with the image **17,** on which only inks are visible, it is feasible to recognize which particles in the image **16** are inks and to distinguish which inks are already detached from or still attached to fibers. Furthermore, the image **16** can be used for calculating and ascertaining the spectral characteristics of a particle including color locus (L*, a*, b* values) with the help of proper software for the image processing.

In accordance with the invention, in addition to 950 nm, the characteristics of inks at other wavelength(s) can be measured by changing or tuning the filter **12.** For example, the wavelength of the filter **12** can be changed to 700 nm by adjusting the filter wheel or operating the tunable filter. The image **17** formed when the filter **12** is a bandpass filter of 700 nm can be used for measuring the absorption coefficients of ink in the image **17** at this wavelength, related to a neighboring background image segment without fiber and particle, which can be selected with the help of the image **16.** From the obtained results of the absorption measurement, a new parameter can be established, which is equivalent to the ink elimination (IE) or the ink detachment (ID).

In another embodiment of the invention, the entrance polarizer **3,** quarter-wave retarders **4** and **9,** and exit polarizer **11** can be oriented with P₂=90°, ϕ₁=45° and ϕ₂=-45° or P₂=0°, ϕ₁=45° and ϕ₂=45° so that the image sensor **13** detects a magnified picture **16** of all fibers and fiber-based particles contained in the sample part **7a** with a dark background, where there is no fiber and particle, independently of the fibers' orientations. The benefit obtained with a dark background image is higher contrast for better displaying or detecting fibers. The image **16** of the channel of the image sensor **13** with a dark background can be compared with the image **17** formed with a bandpass filter of 950 nm as the filter **12** and used to distinguish which inks are already detached from or still attached to fibers in the image **16.**

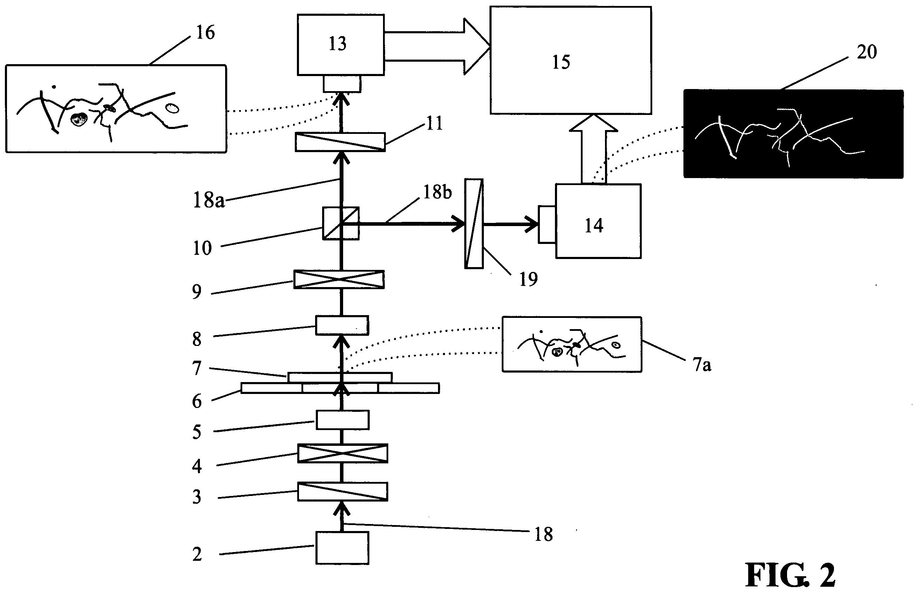

According to the present invention, the equipment in FIG. **1** can be modified so that it can be employed for real-time identification of the fibers and fiber-based particles contained in recycled pulp or pulp from the non-fiber particles. As shown in FIG. **2****,** the modified equipment is a further development of the arrangement of FIG. **1****,** in which the spectral filter **12** is replaced by a second exit polarizer **19** (azimuth P₃), which is oriented perpendicular to the exit polarizer **11** such that P₃=90° if P₂=0° or P₃=0° if P₂=90°. As an example, it is assumed in FIG. **2** that the quarter-wave retarders **4** and **9** and exit polarizer **11** are aligned such ϕ₁=45°, ϕ₂=-45° and P₂=0°. For ϕ₁=45°, ϕ₂=-45° and P₃=90°, the image sensor **14** will detect a magnified picture **20** of all fibers and particles contained in the sample part **7a** with a dark background. The arrangement of the optical components in this channel is also insensitive to the fiber's orientation with the created image **20** determined only by the fiber's and fiber-based particles' properties related to the polarized light. However, all the non-fiber particles contained in the sample part **7a** will be hidden by the dark background and they will become invisible by the sensor **14.** Thus, by comparing the image **20** with the image **16** of the image sensor **13,** it is feasible to distinguish the pulp fibers or fiber-based particles from the non-fiber particles or to recognize which particles are fibrous and which ones are non-fiber particles.

If there is no need for real-time measurement of recycled pulp or pulp, one-channel imaging equipment can be constructed based on the arrangement of FIG. **1** or FIG. **2** and used according to the method of the present invention. For example, the equipment can be constructed to be composed only of the channel of the image sensor **13.** With the exit polarizer **11** parallel to the entrance polarizer **3,** a first image of fibers and particles contained in the sample part **7a** is acquired with the image sensor **13,** which is equivalent to the image **16.** After a first image is acquired, the exit polarizer **11** can be rotated by 90° to be perpendicular to the entrance polarizer **3** and the image sensor **13** detects a second image of fibers and particles contained in the sample part **7a,** which is equivalent to the image **20** with a dark background. Then the exit polarizer **11** can be replaced by the filter **12,** which may be a bandpass filter at an intended wavelength, e.g. 950 nm, and the image sensor **13** now can detect and output a third image of the sample part **7a,** which is equivalent to the image **17** of the sample part **7a.** Thus one can use and process the first, second and third images, which are sequentially acquired, and compare them with each other to evaluate and measure fibers and particles contained in the sample part **7a** according to the method of the present invention as described above.

It should be obvious that the arrangements of FIG. **1** and FIG. **2** can be combined and simply further used for design and construction of equipment consisting of three imaging channels or more so that more measurement assignments can be performed simultaneously. In addition, the arrangements of FIG. **1** and FIG. **2** can be used or can be adapted to be used in the reflection mode.

It should be also obvious that the method and equipment of the present invention can further be used or adapted to be used for measurement of recycled pulp or pulp under on-line conditions. For this purpose, the sample unit **6** in FIG. **1** or FIG. **2** needs to be replaced by a proper capillary (e.g. KajaaniMAP or Pulpexpert) or a flowing cuvette, which holds and guides the sample **7** so that fibers and particles contained in the sample **7** will continuously pass through the capillary or cuvette at a speed as high as the used image sensors allow.

There are capillaries or flowing cells available that hold suspension and can guide pulp fibers in the suspension flowing parallel or approximately parallel to one another, predominately along the flowing direction of the suspension. According to the present invention, the arrangement of FIG. **1** **or** FIG. **2** can be simplified when such a capillary or flowing cell is used as the sample unit **6.** The capillary or flowing cell can be mounted so that the suspension in capillary or flowing cell flows at 45° related to the entrance polarizer **3** and fibers contained in the suspension are guided to be parallel or approximately parallel to one another, moving predominately along the flowing direction of said suspension. In this case, the quarter-wave retarders **4** and **9** can be removed if so wished.

The present invention may be embodied or adapted in other specific form and/or further embodiments without departing from the spirit and basic characteristics thereof. The embodiments given in this description shall be considered in all respects as illustrative and not restrictive. Variations will be apparent to those skilled in the art.

## Claims

1. A method for evaluation of recycled pulp or pulp, the method comprises the steps of providing equipment that contains at least one imaging channel and comprises elements including a light source (2), an entrance polarizer (3), a sample unit (6), an exit polarizer (11), a spectral filter (12) having a predetermined wavelength, at least an image sensor (13, 14) and an image-processing unit (15) for image and data processing, **characterized by**
immersing said recycled pulp or pulp in solution,
placing said recycled pulp or pulp in solution in said sample unit (6),
arranging said light source (2), entrance polarizer (3), sample unit (6), exit polarizer (11) and image sensor (13, 14) arranged along a light beam axis in series in the recited order with said image sensor (13, 14) interfaced to said image-processing unit (15),
generating a first image (16) of fibers and particles selected for measurement by orienting said exit polarizer (11) parallel to said entrance polarizer (3),
detecting said first image (16) of fibers and particles by said image sensor (13) and outputting said first image to said image-processing unit (15),
generating a second image (20) of fibers and particles selected for measurement by orienting said exit polarizer (11) perpendicular to said entrance polarizer (3),
detecting said second image (20) of said fibers and particles by said image sensor (13) and outputting said second image (20) to said image-processing unit (15),
generating a third image (17) of fibers and particles selected for measurement with said exit polarizer (11) replaced by said spectral filter (12),
detecting said third image (17) of said fibers and particles by said image sensor (13) and outputting said third image to said image-processing unit (15), and
processing said first, second and third images (16, 20, 17) in said image-processing unit (15) and comparing said first, second and third images (16, 20, 17) with one another for measuring and evaluating said fibers and particles selected for measurement.

2. The method of claim **1** is **characterized in that** said first and second images (16, 20) of fibers and particles are compared with each other and processed for recognizing which particles in said first image (16) are fiber-based particles and for distinguishing fibers and fiber-based particles from non-fiber particles in said first image (16).

3. The method of claim **1** is **characterized in that** in said third image (17) of fibers and particles only particles visible at said predetermined wavelength of said spectral filter (12) are visible and said third image (17) is used and processed in said image-processing unit (15) for
determining the size, shape and area of a particle visible at said predetermined wavelength and the amount and concentration of particles visible at said predetermined wavelength in said third image (17),
measuring the transmission absorption and opacity of a particle in said third image (17) related to a neighboring background image part without fiber and particle or a calibrated reference, and
measuring a parameter established by combining said transmission absorption and said particle concentration.

4. The method of claim **3** is **characterized in that** said predetermined wavelength of said spectral filter (12) is in the near infrared range, particles visible in said third image (17) are ink particles, and said parameter established by combining said transmission absorption and said particle concentration is equivalent to the effective residual ink concentration (ERIC value), the ink elimination (IE) or the ink detachment (ID), the wavelength of said spectral filter (12) being 700 nm when said particle concentration is equivalent to the ink elimination (IE) or the ink detachment (ID).

5. The method of claims **1, 3** and **4** is **characterized in that** said first (16) or second (20) image of fibers and particles and said third image (17) of ink particles are compared with each other and processed for recognizing which particles in said first (16) or second (20) image are inks and for distinguishing which inks are already detached from or still attached to fibers.

6. The method of claim **1** is **characterized in that** said method further comprises steps of modifying said equipment by inserting a second image sensor (14) and a beamsplitter (10) in said equipment and arranging said light source (2), entrance polarizer (3), sample unit (6), exit polarizer (11), spectral filter (12) and image sensor (13) and said second image sensor (14) and beamsplitter to form two imaging channels such that light (18) emergent from said light source (2) goes through said entrance polarizer (3) and sample unit (6) with said recycled pulp or pulp placed therein, and is divided by said beamsplitter (10) into two component beams (18a, 18b) with one (18a) of said component beams (18a, 18b) detected by said image sensor (13) after passing through said exit polarizer (11) and the other one (18b) by said second image sensor (14) after passing through said spectral filter (12),
interfacing said second image sensor (14) to said image-process unit (15),
generating said first image (16) of fibers and particles selected for measurement with the imaging channel, in which said exit polarizer (11) is, by orienting said exit polarizer (11) parallel to said entrance polarizer (3),
detecting said first image (16) of said fibers and particles by said image sensor (13) and outputting said first image (16) to said image-processing unit (15),
generating said third image (17) of fibers and particles selected for measurement with the imaging channel, in which said spectral filter (12) is,
detecting said third image (17) of said fibers and particles, in which only particles visible at said predetermined wavelength of said spectral filter (12) are visible, by said second image sensor (14) and outputting said third image (17) to said image-processing unit (15), and
processing said first (16) and third images (17) in said image-processing unit (15) and comparing said first and third images (16, 17) with each other for simultaneously measuring and evaluating said fibers and particles selected for measurement.

7. The method of claim **6** is **characterized in that** said image (17) detected by said second image sensor (14) is used and processed in said image-processing unit (15) for
determining the size, shape and area of a particle visible at said predetermined wavelength and the amount and concentration of particles visible at said predetermined wavelength in said image (17) of said second image sensor (14),
measuring the transmission absorption and opacity of a particle in said image (17) of said second image sensor (14) related to a neighboring background image part without fiber and particle or a calibrated reference, and
measuring a parameter established by combining said transmission absorption and said particle concentration.

8. The method of claim **7** is **characterized in that** said predetermined wavelength of said spectral filter (12) is in the near infrared range, particles visible in said image (17) detected by said second image sensor (14) are ink particles, and said parameter established by combining said transmission absorption and said particle concentration is equivalent to the effective residual ink concentration (ERIC value), the ink elimination (IE) or the ink detachment (ID), the wavelength of said spectral filter (12) being 700 nm when said particle concentration is equivalent to the ink elimination (IE) or the ink detachment (ID).

9. The method of claims **6** and **8** is **characterized in that** said image (16) of fibers and particles detected by said first image sensor (13) and said third image (17) of ink particles detected by said second image sensor (14) are compared with each other and processed for recognizing which particles in said image (16) of said first image sensor (13) are inks and for distinguishing which inks are already detached from or still attached to fibers.

10. The method of claims **6** is **characterized in that** said images (16, 17) of fibers and particles detected by said image sensor (13) and said second image sensor (14) are compared with each other and processed for recognizing which particles in said images (16, 17) are fiber-based particles and for distinguishing fibers and fiber-based particles from non-fiber particles.

11. Equipment for measurement of recycled pulp or pulp, said equipment comprising elements including
a light source (2) generating light beam having a spectrum in a predetermined wavelength range,
an entrance polarizer (3),
a sample unit (6) with said recycled pulp or pulp placed therein, which is immersed in solution,
a beamsplitter (10),
an exit polarizer (11),
a filter (12),
a first image sensor (13),
a second image sensor (14), and
an image-processing unit (15) for image and data processing,
said equipment is **characterized in that** said equipment contains two imaging channels connected to said first and second image sensors (13, 14), respectively, and light (18) emergent from said light source (2) goes through said entrance polarizer (3) and sample unit (6) with said recycled pulp or pulp placed therein, and is divided by said beamsplitter (10) into two component beams (18a, 18b) with one of said component (18a) beams detected by said first image sensor (13) after passing through said exit polarizer (11) and the other one (18b) by said second image sensor (14) after passing through said filter (12), and images (16, 20, 17) detected by said first and second image sensors (13, 14) are interfaced to said image-processing unit (15) where said detected images (16, 20, 17) are digitized and processed, and **in that** said filter (12) is a spectral filter (12) of a predetermined wavelength and said second image sensor (14) detects and outputs an image (17) of particles in said recycled pulp or pulp at the predetermined wavelength.

12. The equipment of claim **11** is **characterized in that** said light source (2), entrance polarizer (3), sample unit (6), beamsplitter (10) and exit polarizer (11) are arranged in series in the recited order with said exit polarizer (11) oriented parallel or perpendicular to said entrance polarizer (3) so that said first image sensor (13) detects and outputs an image of fibers and particles contained in said recycled pulp or pulp, which is bright or dark, having the highest or lowest light intensity, respectively, when said recycled pulp or pulp is absent in said sample unit.

13. The equipment of claim **11** is **characterized in that** said sample unit (6) is a capillary or cuvette that holds said suspension and guides fibers and particles in said suspension sequentially passing through for measurement in said equipment.

14. The equipment of claim **11** and **12** is **characterized in that** said equipment further comprises a first quarter-wave retarder (4) and a second quarter-wave retarder (9), which are inserted into said beam, located between said light source (2) and sample unit (6) and between said sample unit (6) and beamsplitter (10), respectively.

15. The equipment of claims **11, 12** and **14** is **characterized in that** said light source (2), entrance polarizer (3), first quarter-wave retarder (4), sample unit (6), second quarter-wave retarder (9), beamsplitter (10) and exit polarizer (11) are arranged in series in the recited order and oriented with said exit polarizer (11) parallel or perpendicular to said entrance polarizer (3) and said first and second quarter-wave retarders (4, 9) having their axes perpendicular or parallel to each other and at 45° related to said entrance polarizer (3) so that said first image sensor (13) detects and outputs an image of fibers and particles contained in said recycled pulp or pulp, which is bright or dark, having the highest or lowest light intensity, when said recycled pulp or pulp is absent in said sample unit.

16. The equipment of claim **15** is **characterized in that** said predetermined wavelength of said spectral filter (12) is in near infrared range, and said second image sensor (14) detects and outputs an image at said predetermined wavelength so that said particles detected by said second image sensor (14) are inks.

17. The equipment of any of claims **11, 12, 15** and **16** is **characterized in that** said equipment further comprises means for reflecting light and said equipment is modified to work in the reflection model such that light beam emergent from said light source (2) is incident at an angle on said recycled pulp or pulp in said sample unit (6) after passing through said entrance polarizer (3) or said entrance polarizer (3) and first quarter-wave retarder (4) and reflected by said recycled pulp or pulp with the help of said means for reflecting light, and said reflected beam is divided by said beamsplitter (10) or divided by said beamsplitter after going through said second quarter-wave retarder (9) into two component beams (18a, 18b) with one of said component (18a) beams detected by said first image sensor (13) after passing through said exit polarizer (11) and the other one (18b) by said second image sensor (14) after passing through said filter (12).

## Patentansprüche

1. Verfahren zur Bewertung von Sekundärfaserstoff oder Faserstoff, wobei das Verfahren die Schritte umfasst:
Bereitstellen einer Einrichtung, die wenigstens einen bildgebenden Kanal enthält und Elemente umfasst, die eine Lichtquelle (2), einen Eingangspolarisator (3), eine Probeneinheit (6), einen Ausgangspolarisator (11), ein Spektralfilter (12) mit einer vorbestimmten Wellenlänge, mindestens einen Bildsensor (13, 14) und eine Bildbearbeitungseinheit (15) zur Bild- und Datenbearbeitung umfassen, **gekennzeichnet durch**
Eintauchen des Sekundärfaserstoffs oder Faserstoffs in Lösung,
Einlegen des Sekundärfaserstoffs oder Faserstoffs in Lösung in die Probeneinheit (6),
Anordnen der Lichtquelle (2), des Eingangspolarisators (3), der Probeneinheit (6), des Ausgangspolarisators (11) und des Bildsensors (13, 14) in Reihe entlang einer Lichtstrahlachse in der genannten Reihenfolge, wobei der Bildsensor (13, 14) an die Bildbearbeitungseinheit (15) angekoppelt ist,
Erzeugen eines ersten Bildes (16) von für die Messung ausgewählten Fasern und Teilchen durch Ausrichtung des Ausgangspolarisators (11) parallel zum Eingangspolarisator (3),
Erfassen des ersten Bildes (16) von Fasern und Teilchen durch den Bildsensor (13) und Ausgeben des ersten Bildes an die Bildbearbeitungseinheit (15),
Erzeugen eines zweiten Bildes (20) von für die Messung ausgewählten Fasern und Teilchen durch Ausrichtung des Ausgangspolarisators (11) senkrecht zum Eingangspolarisator (3),
Erfassen des zweiten Bildes (20) von Fasern und Teilchen durch den Bildsensor (13) und Ausgeben des zweiten Bildes (20) an die Bildbearbeitungseinheit (15),
Erzeugen eines dritten Bildes (17) von für die Messung ausgewählten Fasern und Teilchen, wobei der Ausgangspolarisator (11) durch das Spektralfilter (12) ersetzt wird,
Erfassen des dritten Bildes (17) von Fasern und Teilchen durch den Bildsensor (13) und Ausgeben des dritten Bildes an die Bildbearbeitungseinheit (15), und
Bearbeiten des ersten, zweiten und dritten Bildes (16, 20, 17) in der Bildbearbeitungseinheit (15) und gegenseitiges Vergleichen des ersten, zweiten und dritten Bildes (16, 20, 17) zum Messen und Bewerten der für die Messung ausgewählten Fasern und Teilchen.

2. Verfahren nach Anspruch **1, dadurch gekennzeichnet, dass** das erste und das zweite Bild (16, 20) von Fasern und Teilchen miteinander verglichen und bearbeitet werden, um zu erkennen, welche Teilchen im ersten Bild (16) faserbasierte Teilchen sind, und um im ersten Bild (16) Fasern und faserbasierte Teilchen von Nichtfaserteilchen zu unterscheiden.

3. Verfahren nach Anspruch **1, dadurch gekennzeichnet, dass** im dritten Bild (17) von Fasern und Teilchen nur Teilchen sichtbar sind, die bei der vorbestimmten Wellenlänge des Spektralfilters (12) sichtbar sind, und das dritte Bild (17) verwendet und in der Bildbearbeitungseinheit (15) bearbeitet wird zum
Bestimmen der Größe, Form und Fläche eines bei der vorbestimmten Wellenlänge sichtbaren Teilchens und der Menge und Konzentration der bei der vorbestimmten Wellenlänge sichtbaren Teilchen im dritten Bild (17),
Messen der Transmissionsabsorption und Opazität eines Teilchens im dritten Bild (17) in Bezug zu einem benachbarten Hintergrundbildteil ohne Faser und Teilchen oder zu einer kalibrierten Referenz, und
Messen eines Parameters, der durch Kombinierung der Transmissionsabsorption und der Teilchenkonzentration erstellt wird.

4. Verfahren nach Anspruch **3, dadurch gekennzeichnet, dass** die vorbestimmte Wellenlänge des Spektralfilters (12) im Nahinfrarotbereich liegt, die im dritten Bild (17) sichtbaren Teilchen Druckfarbenpartikel sind und der durch Kombinierung der Transmissionsabsorption und der Teilchenkonzentration erstellte Parameter der effektiven Restdruckfarbenkonzentration (ERIC-Wert), der Druckfarbenentfernung (IE) oder der Druckfarbenablösung (ID) entspricht, wobei die Wellenlänge des Spektralfilters (12) 700 nm beträgt, wenn die Teilchenkonzentration der Druckfarbenentfernung (IE) oder der Druckfarbenablösung (ID) entspricht.

5. Verfahren nach Anspruch **1, 3** und **4, dadurch gekennzeichnet, dass** das erste Bild (16) oder zweite Bild (20) von Fasern und Teilchen und das dritte Bild (17) von Druckfarbenpartikeln miteinander verglichen und bearbeitet werden, um zu erkennen, welche Teilchen im ersten Bild (16) bzw. zweiten Bild (20) Druckfarben sind, und um zu unterscheiden, welche Druckfarben bereits von den Fasern abgelöst oder noch an diesen angelagert sind.

6. Verfahren nach Anspruch **1, dadurch gekennzeichnet, dass** das Verfahren ferner die Schritte umfasst:
Modifizieren der Einrichtung durch Einfügen eines zweiten Bildsensors (14) und eines Strahlteilers (10) in die Einrichtung und Anordnen der Lichtquelle (2), des Eingangspolarisators (3), der Probeneinheit (6), des Ausgangspolarisators (11), des Spektralfilters (12) und des Bildsensors (13) sowie des zweiten Bildsensors (14) und des Strahlteilers zum Ausbilden von zwei bildgebenden Kanälen dergestalt, dass von der Lichtquelle (2) ausgehendes Licht (18) durch den Eingangspolarisator (3) und die Probeneinheit (6) mit darin eingelegtem Sekundärfaserstoff oder Faserstoff hindurchgeht und vom Strahlteiler (10) in zwei Teilstrahlen (18a, 18b) geteilt wird, wobei einer (18a) der Teilstrahlen (18a, 18b) durch den Bildsensor (13) nach Durchgang durch den Ausgangspolarisator (11) erfasst wird und der andere (18b) durch den zweiten Bildsensor (14) nach Durchgang durch das Spektralfilter (12) erfasst wird,
Ankoppeln des zweiten Bildsensors (14) an die Bildbearbeitungseinheit (15),
Erzeugen des ersten Bildes (16) von für die Messung ausgewählten Fasern und Teilchen mit dem bildgebenden Kanal, in welchem sich der Ausgangspolarisator (11) befindet, durch Ausrichten des Ausgangspolarisators (11) parallel zum Eingangspolarisator (3),
Erfassen des ersten Bildes (16) von Fasern und Teilchen durch den Bildsensor (13) und Ausgeben des ersten Bildes (16) an die Bildbearbeitungseinheit (15),
Erzeugen des dritten Bildes (17) von für die Messung ausgewählten Fasern und Teilchen mit dem bildgebenden Kanal, in welchem sich das Spektralfilter (12) befindet,
Erfassen des dritten Bildes (17) von Fasern und Teilchen, in welchem nur Teilchen sichtbar sind, die bei der vorbestimmten Wellenlänge des Spektralfilters (12) sichtbar sind, durch den zweiten Bildsensor (14) und Ausgeben des dritten Bildes (17) an die Bildbearbeitungseinheit (15) und
Bearbeiten des ersten (16) und des zweiten (17) Bildes in der Bildbearbeitungseinheit (15) und gegenseitiges Vergleichen des ersten und dritten Bildes (16, 17) zum gleichzeitigen Messen und Bewerten der für die Messung ausgewählten Fasern und Teilchen.

7. Verfahren nach Anspruch **6, dadurch gekennzeichnet, dass** das vom zweiten Bildsensor (14) erfasste Bild (17) verwendet und in der Bildbearbeitungseinheit (15) bearbeitet wird zum
Bestimmen der Größe, Form und Fläche eines bei der vorbestimmten Wellenlänge sichtbaren Teilchens und der Menge und Konzentration der bei der vorbestimmten Wellenlänge im Bild (17) des zweiten Bildsensors (14) sichtbaren Teilchen,
Messen der Transmissionsabsorption und Opazität eines Teilchens im Bild (17) des zweiten Bildsensors (14) in Bezug zu einem benachbarten Hintergrundbildteil ohne Faser und Teilchen oder zu einer kalibrierten Referenz, und
Messen eines Parameters, der durch Kombinierung der Transmissionsabsorption und der Teilchenkonzentration erstellt wird.

8. Verfahren nach Anspruch **7, dadurch gekennzeichnet, dass** die vorbestimmte Wellenlänge des Spektralfilters (12) im Nahinfrarotbereich liegt, die Teilchen, die im vom zweiten Bildsensor (14) erfassten Bild (17) sichtbar sind, Druckfarbenpartikel sind und der durch Kombinierung der Transmissionsabsorption und der Teilchenkonzentration erstellte Parameter der effektiven Restdruckfarbenkonzentration (ERIC-Wert), der Druckfarbenentfernung (IE) oder der Druckfarbenablösung (ID) entspricht, wobei die Wellenlänge des Spektralfilters (12) 700 nm beträgt, wenn die Teilchenkonzentration der Druckfarbenentfernung (IE) oder der Druckfarbenablösung (ID) entspricht.

9. Verfahren nach Anspruch **6** und **8, dadurch gekennzeichnet, dass** das vom ersten Bildsensor (13) erfasste Bild (16) von Fasern und Teilchen und das vom zweiten Bildsensor (14) erfasste dritte Bild (17) von Druckfarbenpartikeln miteinander verglichen und bearbeitet werden, um zu erkennen, welche Teilchen im Bild (16) des ersten Bildsensors (13) Druckfarben sind, und um zu unterscheiden, welche Druckfarben bereits von den Fasern abgelöst oder noch an diesen angelagert sind.

10. Verfahren nach Anspruch **6, dadurch gekennzeichnet, dass** die vom Bildsensor (13) und vom zweiten Bildsensor (14) erfassten Bilder (16, 17) von Fasern und Teilchen miteinander verglichen und bearbeitet werden, um zu erkennen, welche Teilchen in den Bildern (16, 17) faserbasierte Teilchen sind, und um Fasern und faserbasierte Teilchen von Nichtfaserteilchen zu unterscheiden.

11. Einrichtung zum Messen von Sekundärfaserstoff oder Faserstoff, wobei die Einrichtung Elemente umfasst, welche umfassen:
eine Lichtquelle (2), die einen Lichtstrahl mit einem Spektrum in einem vorbestimmten Wellenlängenbereich erzeugt,
einen Eingangspolarisator (3),
eine Probeneinheit (6) mit dem darin eingelegten Sekundärfaserstoff bzw. Faserstoff, der in Lösung getaucht ist,
einen Strahlteiler (10),
einen Ausgangspolarisator (11),
ein Filter (12),
einen ersten Bildsensor (13),
einen zweiten Bildsensor (14), und
eine Bildbearbeitungseinheit (15) zur Bild- und Datenbearbeitung,
wobei die Einrichtung **dadurch gekennzeichnet ist, dass** die Einrichtung zwei bildgebende Kanäle enthält, die mit dem ersten bzw. zweiten Bildsensor (13, 14) verbunden sind, und das von der Lichtquelle (2) ausgehende Licht (18) durch den Eingangspolarisator (3) und die Probeneinheit (6) mit darin eingelegtem Sekundärfaserstoff oder Faserstoff hindurchgeht und vom Strahlteiler (10) in zwei Teilstrahlen (18a, 18b) geteilt wird, wobei einer (18a) der Teilstrahlen durch den ersten Bildsensor (13) nach Durchgang durch den Ausgangspolarisator (11) erfasst wird und der andere (18b) durch den zweiten Bildsensor (14) nach Durchgang durch das Filter (12) erfasst wird, und die vom ersten und zweiten Bildsensor (13, 14) erfassten Bilder (16, 20, 17) an die Bildbearbeitungseinheit (15) angekoppelt sind, wo die erfassten Bilder (16, 20, 17) digitalisiert und bearbeitet werden, und dadurch, dass das Filter (12) ein Spektralfilter (12) einer vorbestimmten Wellenlänge ist und der zweite Bildsensor (14) ein Bild (17) von Teilchen im Sekundärfaserstoff oder Faserstoff bei vorbestimmter Wellenlänge erfasst und ausgibt.

12. Einrichtung nach Anspruch **11, dadurch gekennzeichnet, dass** die Lichtquelle (2), der Eingangspolarisator (3), die Probeneinheit (6), der Strahlteiler (10) und der Ausgangspolarisator (11) in der genannten Reihenfolge in Reihe angeordnet sind, wobei der Ausgangspolarisator (11) parallel oder senkrecht zum Eingangspolarisator (3) ausgerichtet ist, so dass der erste Bildsensor (13) ein Bild von im Sekundärfaserstoff oder Faserstoff enthaltenen Fasern und Teilchen erfasst und ausgibt, das hell oder dunkel ist und die höchste bzw. niedrigste Lichtintensität aufweist, wenn der Sekundärfaserstoff oder Faserstoff in der Probeneinheit nicht vorhanden ist.

13. Einrichtung nach Anspruch **11, dadurch gekennzeichnet, dass** die Probeneinheit (6) eine Kapillare oder Küvette ist, die die Suspension aufnimmt und nacheinander hindurchgehende Fasern und Teilchen der Suspension zur Messung in der Einrichtung führt.

14. Einrichtung nach Anspruch **11** und **12, dadurch gekennzeichnet, dass** die Einrichtung weiterhin einen ersten Viertelwellenverzögerer (4) und einen zweiten Viertelwellenverzögerer (9) umfasst, die in den Strahl eingefügt werden und zwischen der Lichtquelle (2) und der Probeneinheit (6) bzw. zwischen der Probeneinheit (6) und dem Strahlteiler (10) angeordnet sind.

15. Einrichtung nach Anspruch **11, 12** und **14, dadurch gekennzeichnet, dass** die Lichtquelle (2), der Eingangspolarisator (3), der erste Viertelwellenverzögerer (4), die Probeneinheit (6), der zweite Viertelwellenverzögerer (9), der Strahlteiler (10) und der Ausgangspolarisator (11) in der genannten Reihenfolge in Reihe angeordnet und so ausgerichtet sind, dass der Ausgangspolarisator (11) parallel oder senkrecht zum Eingangspolarisator (3) steht, und dass der erste und der zweite Viertelwellenverzögerer (4, 9) mit ihren Achsen senkrecht oder parallel zueinander und mit 45° zum Eingangspolarisator (3) stehen, so dass der erste Bildsensor (13) ein Bild von im Sekundärfaserstoff oder Faserstoff enthaltenen Fasern und Teilchen erfasst und ausgibt, das hell oder dunkel ist und die höchste bzw. niedrigste Lichtintensität aufweist, wenn der Sekundärfaserstoff oder Faserstoff in der Probeneinheit nicht vorhanden ist.

16. Einrichtung nach Anspruch **15, dadurch gekennzeichnet, dass** die vorbestimmte Wellenlänge des Spektralfilters (12) im Nahinfrarotbereich liegt und der zweite Bildsensor (14) bei der vorbestimmten Wellenlänge ein Bild so erfasst und ausgibt, dass die vom zweiten Bildsensor (14) erfassten Teilchen Druckfarben sind.

17. Einrichtung nach einem der Ansprüche **11, 12, 15** und **16, dadurch gekennzeichnet, dass** die Einrichtung weiterhin Mittel zum Reflektieren von Licht umfasst und die Einrichtung so modifiziert ist, dass sie im Reflexionsmodell dergestalt arbeitet, dass ein von der Lichtquelle (2) ausgehender Lichtstrahl nach Durchgang durch den Eingangspolarisator (3) oder durch den Eingangspolarisator (3) und ersten Viertelwellenverzögerer (4) mit einem Winkel auf den Sekundärfaserstoff oder Faserstoff in der Probeneinheit (6) einfällt und vom Sekundärfaserstoff oder Faserstoff mit Hilfe der Mittel zum Reflektieren von Licht reflektiert wird und der reflektierte Strahl vom Strahlteiler (10), oder vom Strahlteiler nach Durchgang durch den zweiten Viertelwellenverzögerer (9), in zwei Teilstrahlen (18a, 18b) geteilt wird, wobei einer (18a) der Teilstrahlen vom ersten Bildsensor (13) nach Durchgang durch den Ausgangspolarisator (11) und der andere (18b) vom zweiten Bildsensor (14) nach Durchgang durch das Filter (12) erfasst wird.

## Revendications

1. Procédé d'évaluation de pâte recyclée ou de pâte, ledit procédé comprenant les étapes consistant à
fournir un équipement qui contient au moins un canal d'imagerie et comprend des éléments comportant une source lumineuse (2), un polariseur d'entrée (3), une unité d'échantillonnage (6), un polariseur de sortie (11), un filtre spectral (12) ayant une longueur d'onde prédéterminée, au moins un capteur d'image (13, 14) et une unité de traitement d'image (15) pour le traitement d'images et de données, **caractérisé par**
immerger ladite pâte recyclée ou pâte en solution,
placer ladite pâte recyclée ou pâte en solution dans ladite unité d'échantillonnage (6), disposer ladite source lumineuse (2), ledit polariseur d'entrée (3), ladite unité d'échantillonnage (6), ledit polariseur de sortie (11) et ledit capteur d'image (13, 14) mis en série dans l'ordre cité le long d'un axe du rayon lumineux, ledit capteur d'image (13, 14) étant interfacé à ladite unité de traitement d'image (15),
générer une première image (16) de fibres et particules sélectionnées pour la mesure en orientant ledit polariseur de sortie (11) parallèlement audit polariseur d'entrée (3),
détecter ladite première image (16) de fibres et particules par ledit capteur d'image (13) et délivrer ladite première image à ladite unité de traitement d'image (15),
générer une deuxième image (20) de fibres et particules sélectionnées pour la mesure en orientant ledit polariseur de sortie (11) perpendiculairement audit polariseur d'entrée (3),
détecter ladite deuxième image (20) de fibres et particules par ledit capteur d'image (13) et délivrer ladite deuxième image (20) à ladite unité de traitement d'image (15),
générer une troisième image (17) de fibres et particules sélectionnées pour la mesure, ledit polariseur de sortie (11) étant remplacé par ledit filtre spectral (12),
détecter ladite troisième image (17) de fibres et particules par ledit capteur d'image (13) et délivrer ladite troisième image à ladite unité de traitement d'image (15), et
traiter lesdites première, deuxième et troisième images (16, 20, 17) dans ladite unité de traitement d'image (15) et comparer lesdites première, deuxième et troisième images (16, 20, 17) entre elles pour mesurer et évaluer lesdites fibres et particules sélectionnées pour la mesure.

2. Procédé selon la revendication **1, caractérisé en ce que** lesdites première et deuxième images (16, 20) de fibres et particules sont comparées entre elles et traitées pour reconnaître lesquelles des particules dans ladite première image (16) sont des particules à base de fibres, et pour distinguer les fibres et particules à base de fibres des particules non fibreuses dans ladite première image (16).

3. Procédé selon la revendication **1, caractérisé en ce que** les seules particules visibles dans ladite troisième image (17) de fibres et particules sont celles visibles à la longueur d'onde prédéterminée dudit filtre spectral (12) et que ladite troisième image (17) est utilisée et traitée dans ladite unité de traitement d'image (15) afin de
déterminer la taille, la forme et l'aire d'une particule visible à ladite longueur d'onde prédéterminée et la quantité et la concentration de particules visibles à ladite longueur d'onde prédéterminée dans la troisième image (17),
mesurer l'absorption transmissive et l'opacité d'une particule dans ladite troisième image (17) par rapport à une partie d'image de fond avoisinante sans fibres ni particules ou à une référence calibrée, et
mesurer un paramètre établi en combinant ladite absorption transmissive et ladite concentration de particules.

4. Procédé selon la revendication **3, caractérisé en ce que** ladite longueur d'onde prédéterminée dudit filtre spectral (12) est dans le domaine du proche infrarouge, les particules visibles dans ladite troisième image (17) sont des particules d'encres et le paramètre établi en combinant ladite absorption transmissive et ladite concentration de particules est équivalent à la concentration d'encre résiduelle effective (valeur ERIC), à l'élimination d'encre (IE) ou au décrochage d'encre (ID), la longueur d'onde dudit filtre spectral (12) étant de 700 nm lorsque la concentration de particules est équivalente à l'élimination d'encre (IE) ou au décrochage d'encre (ID).

5. Procédé selon la revendication **1, 3** et **4, caractérisé en ce que** ladite première image (16) ou ladite deuxième image (20) de fibres et particules et ladite troisième image (17) de particules d'encres sont comparées entre elles et traitées pour reconnaître lesquelles des particules dans ladite première image (16) ou ladite deuxième image (20) sont des encres, et pour distinguer quelles encres sont déjà décrochées des fibres ou y sont toujours accrochées.

6. Procédé selon la revendication **1, caractérisé en ce que** ledit procédé comprend également les étapes consistant à
modifier ledit équipement en insérant un deuxième capteur d'image (14) et un diviseur de rayon (10) dans ledit équipement et disposer ladite source lumineuse (2), ledit polariseur d'entrée (3), ladite unité d'échantillonnage (6), ledit polariseur de sortie (11), ledit filtre spectral (12) et ledit capteur d'image (13) et ledit deuxième capteur d'image (14) et ledit diviseur de rayon de manière à former deux canaux d'imagerie de sorte que la lumière (18) émanant de ladite source lumineuse (2) passe par ledit polariseur d'entrée (3) et ladite unité d'échantillonnage (6), avec ladite pâte recyclée ou pâte placée à l'intérieur, et soit divisée par ledit diviseur de rayon (10) en deux rayons partiels (18a, 18b), l'un (18a) des rayons partiels (18a, 18b) étant détecté par ledit capteur d'image (13) après passage au travers dudit polariseur de sortie (11) et l'autre (18b) par ledit deuxième capteur d'image (14) après passage au travers dudit filtre spectral (12),
interfacer ledit deuxième capteur d'image (14) à ladite unité de traitement d'image (15),
générer ladite première image (16) de fibres et particules sélectionnées pour la mesure avec le canal d'imagerie, dans lequel se trouve le polariseur de sortie (11), en orientant ledit polariseur de sortie (11) parallèlement audit polariseur d'entrée (3),
détecter ladite première image (16) de fibres et particules par ledit capteur d'image (13) et délivrer ladite première image (16) à ladite unité de traitement d'image (15),
générer ladite troisième image (17) de fibres et particules sélectionnées pour la mesure avec le canal d'imagerie dans lequel se trouve ledit filtre spectral (12),
détecter par ledit deuxième capteur d'image (14) ladite troisième image (17) desdites fibres et particules, dans laquelle les seules particules visibles sont celles visibles à ladite longueur d'onde prédéterminée dudit filtre spectral (12), et délivrer ladite troisième image (17) à ladite unité de traitement d'image (15), et
traiter lesdites première (16) et troisième (17) images dans ladite unité de traitement d'image (15) et comparer lesdites première et troisième images (16, 17) entre elles pour mesurer et évaluer simultanément lesdites fibres et particules sélectionnées pour la mesure.

7. Procédé selon la revendication **6, caractérisé en ce que** ladite image (17) détectée par ledit deuxième capteur d'image (14) est utilisée et traitée dans ladite unité de traitement d'image (15) afin de
déterminer la taille, la forme et l'aire d'une particule visible à ladite longueur d'onde prédéterminée et la quantité et la concentration de particules visibles à ladite longueur d'onde prédéterminée dans ladite image (17) dudit deuxième capteur d'image (14),
mesurer l'absorption transmissive et l'opacité d'une particule dans ladite image (17) dudit deuxième capteur d'image (14) par rapport à une partie d'image de fond avoisinante sans fibres ni particules ou à une référence calibrée, et
mesurer un paramètre établi en combinant ladite absorption transmissive et ladite concentration de particules.

8. Procédé selon la revendication **7, caractérisé en ce que** ladite longueur d'onde prédéterminée dudit filtre spectral (12) est dans le domaine du proche infrarouge, les particules visibles dans ladite image (17) détectée par ledit deuxième capteur d'image (14) sont des particules d'encres et le paramètre établi en combinant ladite absorption transmissive et ladite concentration de particules est équivalent à la concentration d'encre résiduelle effective (valeur ERIC), à l'élimination d'encre (IE) ou au décrochage d'encre (ID), la longueur d'onde dudit filtre spectral (12) étant de 700 nm lorsque la concentration de particules est équivalente à l'élimination d'encre (IE) ou au décrochage d'encre (ID).

9. Procédé selon la revendication **6** et **8, caractérisé en ce que** ladite image (16) de fibres et particules détectée par ledit premier capteur d'image (13) et ladite troisième image (17) de particules d'encres détectée par ledit deuxième capteur d'image (14) sont comparées entre elles et traitées pour reconnaître lesquelles des particules dans ladite image (16) dudit premier capteur d'image (13) sont des encres, et pour distinguer quelles encres sont déjà décrochées des fibres ou y sont toujours accrochées.

10. Procédé selon la revendication **6, caractérisé en ce que** lesdites images (16, 17) de fibres et particules respectivement détectées par ledit capteur d'image (13) et ledit deuxième capteur d'image (14) sont comparées entre elles pour reconnaître lesquelles des particules dans lesdites images (16, 17) sont des particules à base de fibres, et pour distinguer les fibres et particules à base de fibres des particules non fibreuses.

11. Équipement pour mesurer la pâte recyclée ou pâte, ledit procédé comprenant des éléments qui comportent :
une source lumineuse (2) générant un rayon lumineux ayant un spectre dans une plage de longueur d'onde prédéterminée,
un polariseur d'entrée (3),
une unité d'échantillonnage (6) avec ladite pâte recyclée ou pâte placée à l'intérieur, qui est immergée en solution,
un diviseur de rayon (10),
un polariseur de sortie (11),
un filtre (12),
un premier capteur d'image (13),
un deuxième capteur d'image (14), et
une unité de traitement d'image (15) pour le traitement d'images et de données,
ledit équipement étant **caractérisé en ce que** ledit équipement contient deux canaux d'imagerie respectivement raccordés auxdits premier et deuxième capteurs d'image (13, 14) et que la lumière (18) émanant de ladite source lumineuse (2) passe par ledit polariseur d'entrée (3) et ladite unité d'échantillonnage (6), avec ladite pâte recyclée ou pâte placée à l'intérieur, et est divisée par ledit diviseur de rayon (10) en deux rayons partiels (18a, 18b), l'un (18a) des rayons partiels étant détecté par ledit premier capteur d'image (13) après passage au travers dudit polariseur de sortie (11) et l'autre (18b) par ledit deuxième capteur d'image (14) après passage au travers dudit filtre (12), et lesdites images (16, 20, 17) détectées par les premier et deuxième capteurs d'image (13, 14) sont interfacées à l'unité de traitement d'image (15) où lesdites images (16, 20, 17) détectées sont numérisées et traitées, et **en ce que** ledit filtre (12) est un filtre spectral (12) d'une longueur d'onde prédéterminée et ledit deuxième capteur d'image (14) détecte et délivre une image (17) de particules dans ladite pâte recyclée ou pâte à la longueur d'onde prédéterminée.

12. Équipement selon la revendication **11, caractérisé en ce que** la source lumineuse (2), le polariseur d'entrée (3), l'unité d'échantillonnage (6), le diviseur de rayon (10) et le polariseur de sortie (11) sont disposés en série dans l'ordre cité, ledit polariseur de sortie (11) étant orienté parallèlement ou perpendiculairement audit polariseur d'entrée (3) de sorte que ledit premier capteur d'image (13) détecte et délivre une image de fibres et particules contenues dans ladite pâte recyclée ou pâte, qui est claire ou foncée et a l'intensité lumineuse la plus élevée ou respectivement la plus réduite lorsque ladite pâte recyclée ou pâte est absente dans ladite unité d'échantillonnage.

13. Équipement selon la revendication **11, caractérisé en ce que** l'unité d'échantillonnage (6) est un capillaire ou une cuvette qui capte ladite suspension et guide des fibres et particules dans ladite suspension en passage séquentiel pour les mesurer dans ledit équipement.

14. Équipement selon la revendication **11** et **12, caractérisé en ce que** ledit équipement comprend également un premier retardateur quart d'onde (4) et un deuxième retardateur quart d'onde (9) qui sont insérés dans ledit rayon et respectivement situés entre ladite source lumineuse (2) et ladite unité d'échantillonnage (6) ou entre ladite unité d'échantillonnage (6) et ledit diviseur de rayon (10).

15. Équipement selon la revendication **11, 12** et **14, caractérisé en ce que** ladite source lumineuse (2), ledit polariseur d'entrée (3), ledit premier retardateur quart d'onde (4), ladite unité d'échantillonnage (6), ledit deuxième retardateur quart d'onde (9), ledit diviseur de rayon (10) et ledit polariseur de sortie (11) sont disposés en série dans l'ordre cité et orientés de sorte que ledit polariseur de sortie (11) soit parallèle ou perpendiculaire audit polariseur d'entrée (3), et lesdits premier et deuxième retardateurs quart d'onde (4, 9) ayant leurs axes perpendiculaires ou parallèles l'un à l'autre et à 45° par rapport audit polariseur d'entrée (3) de sorte que ledit premier capteur d'image (13) détecte et délivre une image de fibres et particules contenues dans ladite pâte recyclée ou pâte, qui est claire ou foncée et a l'intensité lumineuse la plus élevée ou respectivement la plus réduite lorsque ladite pâte recyclée ou pâte est absente dans ladite unité d'échantillonnage.

16. Équipement selon la revendication **15, caractérisé en ce que** ladite longueur d'onde prédéterminée dudit filtre spectral (12) est dans le domaine du proche infrarouge et ledit deuxième capteur d'image (14) détecte et délivre une image à ladite longueur d'onde prédéterminée de sorte que les particules détectées par ledit deuxième capteur d'image (14) soient des encres.

17. Équipement selon l'une des revendications **11, 12, 15** et **16, caractérisé en ce que** ledit équipement comprend également des moyens réfléchissant la lumière et ledit équipement est modifié de manière à fonctionner dans le modèle de réflexion de sorte qu'un rayon lumineux émanant de ladite source lumineuse (2), après passage au travers dudit polariseur d'entrée (3) ou au travers dudit polariseur d'entrée (3) et dudit premier retardateur quart d'onde (4), soit incident à un angle sur ladite pâte recyclée ou pâte dans ladite unité d'échantillonnage (6) et réfléchi par ladite pâte recyclée ou pâte à l'aide desdits moyens réfléchissant la lumière et que ledit rayon réfléchi soit divisé en deux rayons partiels (18a, 18b) par ledit diviseur de rayon (10), ou par ledit diviseur de rayon après passage au travers dudit deuxième retardateur quart d'onde (9), l'un (18a) desdits rayons partiels étant détecté par ledit premier capteur d'image (13) après passage au travers dudit polariseur de sortie (11) et l'autre (18b) par ledit deuxième capteur d'image (14) après passage au travers dudit filtre (12).
